# FASCICULE DE BREVET EUROPEEN

(11) **EP 1 923 280 B1**
(45) Date de publication et mention de la délivrance du brevet: **18.11.2009**
(21) Numéro de dépôt: 07119750.3
(22) Date de dépôt: 31.10.2007
(51) Int. Cl.: B60S 1/02, G01N 21/17

(54) **Capteur photosensible dans le domaine automobile**
Photosensibler Sensor für den Automobilsektor
Light-sensitive sensor in the automobile field

(30) Priorité: 15.11.2006 FR 0609962
(43) Date de publication de la demande: 21.05.2008
(73) Titulaire: VALEO VISION, 93012 Bobigny (FR)
(72) Inventeur: Fleury, Benoît, 94300, VINCENNES (FR)
(74) Mandataire: Renous Chan, Véronique

(56) Documents cités:
- WO-A-03/029056
- WO-A-03/029757
- US-A1- 2002 056 805
- US-A1- 2002 148 987
- US-A1- 2006 076 478
- US-B2- 6 672 744

## Description

La présente invention concerne des caméras équipées de capteurs, par exemple du type capteur CCD (capteurs à couplage de charge), capteur CMOS (Complementary Metal Oxide Semiconductor) ou encore des caméras de type caméras vidéo. Ces capteurs seront regroupés dans la suite du présent texte sous le terme générique de capteurs photosensibles. Ils fournissent des signaux représentatifs d'image qui peuvent ensuite être traités. Ils sont généralement sensibles dans le visible et/ou dans l'infrarouge, notamment dans le proche infrarouge.

On intègre de plus en plus fréquemment ce type de capteurs photosensibles dans des véhicules automobiles. Les images obtenues peuvent être traitées pour permettre l'affichage d'images sur des écrans, par exemple au niveau du tableau de bord ou en projection sur le pare-brise, notamment pour alerter le conducteur en cas de danger ou simplement pour améliorer sa visibilité. Les images peuvent aussi permettre de détecter des gouttes de pluie sur le pare-brise.

Ces images peuvent participer au déclenchement automatique d'une fonctionnalité du véhicule (alerte au conducteur, déclenchement automatique de freinage, déclenchement automatique des essuie-glace en cas de visualisation de gouttes d'eau sur le pare-brise, avertissement visuel ou sonore, pilotage de certaines fonctions du projecteur ...).

Ces capteurs peuvent être utilisés de jour. Ils peuvent aussi être utilisés de nuit, on peut alors exploiter leurs capacités à détecter les rayonnements dans l'infrarouge. En utilisation nocturne, ces capteurs participent ainsi par exemple à la fonctionnalité « vision de nuit » (ou « night vision » en anglais), où les images, une fois traitées, sont projetées sur un écran d'affichage généralement sous forme d'images en noir et blanc.

On voit de ces applications très variées qu'il est souhaitable, mais très difficile en pratique, d'utiliser un seul capteur pour réaliser plusieurs de ces applications, car les paramètres de saisie des images varient considérablement selon les applications.

Prenons une application intéressant particulièrement la présente invention, à savoir l'utilisation d'un capteur pour détecter des gouttes d'eau éventuelles sur le pare-brise du véhicule, ceci afin de piloter automatiquement le fonctionnement des essuie-glace : Le capteur est généralement embarqué dans le véhicule à proximité du pare-brise, à par exemple une vingtaine de centimètres de celui-ci, et il est donc associé à une optique focalisée sur le pare-brise afin de pouvoir détecter précisément les gouttes d'eau sur le pare-brise, leurs contours, leur taille .... Au contraire, si l'on veut utiliser un capteur pour prendre des images de la route, c'est à dire des images en champ lointain à travers le pare-brise, il faut cette fois associer au capteur une optique focalisée à l'infini.

On en vient donc à utiliser des capteurs dédiés, un par application, ce qui augmente le coût, l'encombrement et la complexité des équipements du véhicule, l'encombrement n'étant pas le moindre des inconvénients car l'espace disponible à proximité du pare-brise est souvent très limité.

L'invention a alors pour but de remédier à ces inconvénients, notamment en proposant un nouveau type de capteur embarqué dans un véhicule qui puisse servir à plusieurs applications de façon satisfaisante.

La demande WO 03/029757 décrit un détecteur d'humidité sur une surface, utilisant des sous-fenêtres.

L'invention a tout d'abord pour objet un système selon la rev. independante 1.

Le « champ proche » est un terme connu de l'homme de l'art, il se raporte ici, notamment à une distance de l'ordre du centimètre ou de quelques dizaines de centimètres (correspondant par exemple à une distance habituelle caméra- zone essuyée de parebrise dans le véhicule).

On peut adapter selon les besoins la taille relative des première et seconde zones de l'obectif.

L'une peut ainsi avoir une surface majoritaire ou minoritaire par rapport à l'autre. On comprend par « majoritaire » et « minoritaire » les étendues spatiales respectives des zones de l'objectif focalisées différemment. « Majoritaire » signifie donc que la zone de l'objectif qui est focalisée à l'infini (respectivement à champ proche) s'étend sur plus de 50% de la surface d'entrée de l'objectif placé devant le capteur.

Selon un mode de réalisation de l'invention, le ratio entre les surfaces des deux zones de l'objectif est d'environ 50/50 ou, plus généralement, dans la gamme 70/30-60/40. Le choix du ratio se fera, notamment, selon que l'on veut favoriser la détection d'images proches ou lointaines, selon les applications visées.

L'invention propose donc d'utiliser un objectif multi-, notamment bifocal de façon à ce que le capteur embarqué puisse devenir multifonctions : des procédés de détection de bords de voie, de bords de route, de détection de piétons ou d'obstacles vont pouvoir exploiter les portions d'images prises par le capteur, suffisamment nettes grâce à la zone de l'objectif focalisé à l'infini. Et un procédé du type fonctionnement automatique des essuie glace va pouvoir exploiter la portion d' images prises à très courte distance, sur le pare-brise, à travers la zone de l'objectif focalisé sur le pare-brise. On peut avoir ainsi une image qui est la superposition d'images prises au loin avec la focale adaptée, et d'images prises à proche distance à focale plus petite. Il peut être utile, optionnellement, d'améliorer le contraste d'une au moins des images ou de la superposition d'images ainsi obtenue(s) par un traitement connu du type renforcement des contrastes.

Avantageusement, l'objectif comporte une pluralité d'éléments optiques du type lentilles, notamment regroupées en un ou plusieurs trains de lentilles de façon connue, dont un élément optique définissant la zone et disposé dans ou substantiellement à proximité d'un plan de pupille d'ouverture de l'objectif. Cette disposition particulière garantit que tout point de l'image en champ lointain (image de la route) d'une part et que tout point de l'image en champ proche (image du pare-brise) d'autre part est formé par une quantité equivalente de rayons (portions de la pupille d'ouverture équivalentes).

Cet élément optique, une fois cette condition remplie, peut être disposé à tout endroit de l'objectif, qui est généralement une combinaison complexe de lentilles. Deux configurations sont envisagées, notamment : soit c'est le premier élément optique depuis l'entrée de l'objectif, soit c'est un élément optique disposé juste en amont. On comprend par « entrée » de l'objectif la face de l'objectif tournée vers l'image à prendre, vers l'extérieur donc, et par « amont » un disposition à l'avant de l'obejctif par rapport à l'image à détecter.

Selon un mode de réalisation, cet élément optique est une lentille majoritairement neutre sur le plan optique et localement focalisée en champ proche. Il peut s'agir notamment d'une lentille à faces d'entrée et de sortie parallèles, et présentant localement une face de sortie sensiblement au moins partiellement convexe.

Selon un autre mode de réalisation, cet élément optique est la première lentille de l'objectif, la lentille d'entrée de celui-ci, la zone focalisée en champ proche étant obtenu par une modification locale de la courbure de la face de sortie de la lentille, notamment avec une partie convexe différente de la courbure du reste de la face de sortie.

Dans un cas comme dans l'autre, la modification peut se présenter sous forme d'une portion de lentille sphérique ou asphérique.

Avantageusement, la zone focalisée en champ proche de la face de sortie de l'élément optique est située dans la partie centrale dudit élément.

Concrètement, l'objectif peut être un train de lentilles dont la première lentille est modifiée ou associée à une lentille modifiée, les lentilles étant toutes de contour sensiblement circulaire, et la modification étant une zone centrée sur la face de lentille considérée, et protubérante par rapport à la courbure ou l'absence de courbure de celle-ci.

Le capteur et son objectif ainsi décrits peuvent être utilisé dans un procédé de détection de gouttes de pluie sur un pare-brise du véhicule, mais aussi pour la saisie d'images de scènes de la route à travers le pare-brise du véhicule.

L'invention concerne aussi un procédé de détection de gouttes de pluie sur un pare-brise selon la rev. indépendante 10.

L'invention concerne aussi un dispositif de traitement d'images embarqué sur un véhicule automobile selon la rev. indépendante 11..

L'invention concerne aussi un procédé de traitement d'images selon la rev. indépendante 12.

L'invention concerne aussi le véhicule automobile selon la rev. indépendante 13.

L'invention sera détaillée ci-après avec des exemples non limitatifs, à l'aide des figures suivantes :
- **fig.1a,1b,1c** : une représentation schématique d'objectifs de capteur intéressant l'invention,
- **fig. 2a,2b** : une représentation schématique d'un capteur avec objectif modifié selon l'invention vu en coupe, selon que l'on considère une image d'une scène de route au loin (Fig.2a) ou d'une goutte d'eau sur le pare-brise (Fig.2b).,
- **fig. 3** :une représentation de la lentille modifiée de l'objectif selon la figure précédente, vue de face et vue de côté,
- **Fig. 4a,4b,4c** : des images prises au loin selon l'invention,
- **Fig. 5a,5b,5c** : des images prises à courte distance selon l'invention,
- **Fig. 6** : une image superposant une image prise au loin et prise à courte distance selon l'invention. Toutes ces figures sont extrêmement schématiques et ne respectent pas nécessairement l'échelle, pour plus de clarté.

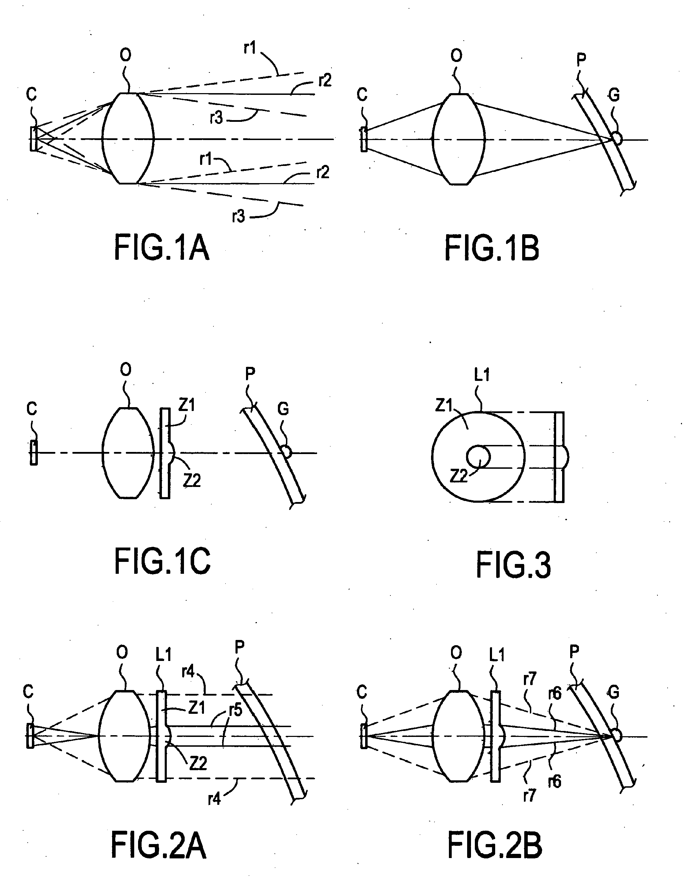

La figure 1a représente un capteur standard C, du type CCD, et associé à un objectif O focalisé à l'infini afin de saisir des images au loin. Capteur et objectif sont disposés derrière la zone essuyée du pare-brise d'un véhicule automobile, à environ une dizaine à une vingtaine de centimètres de celui-ci. L'objectif O comporte un train de lentilles, il a été symbolisé par une unique lentille O. On a tracé des rayons entrant dans l'objectif pour atteindre la surface réceptrice du capteur C : Les rayons r1 sont situés dans le haut, r2 en partie médiane et r3 en partie basse, de l'image.

La figure 1b ajoute à la figure précédente la représentation symbolique d'un pare-brise P et d'une goutte G sur celui-ci. Avec un tel objectif, cette goutte d'eau G sur le pare-brise n'est pas correctement imagée sur le capteur, et n'est donc pas détectable par traitement d'images.

Comme représenté à la figure 1c, on ajoute selon l'invention à l'objectif O une lentille supplémentaire L1, qui est majoritairement neutre sur le plan optique, sauf dans sa partie centrale où elle présente une zone Z2 focalisée en champ proche, de forme au moins partiellement convexe : on obtient un objectif avec une zone Z1 à focale à l'infini « entourant » une zone Z2 focalisée en champ proche.

La figure 3 présente la face de sortie de la lentille modifiée L1 : la zone focalisée en champ proche Z2 est de forme circulaire, disposée sur la face de sortie circulaire de la lentille, de manière concentrique. Selon un exemple de réalisation, la zone Z1 et la zone Z2 sont de dimensions similaires (une fois projetées sur un plan vertical selon la figure). La zone Z2 modifiée est ici de forme convexe, substantiellement sphérique. Alternativement, la zone Z2 peut être asphérique.

Comme représenté en figure 2a, cette lentille L1 se trouve dans un plan de pupille d'ouverture de l'objectif O. Cette lentille ne modifie pas le cheminement des rayons imageant des objets à grande distance, sauf au centre de l'image. Cependant, les rayons qui traversent l'objectif dans cette partie centrale Z2 sont déviés de telle manière qu'ils n'imagent plus le centre de l'image.

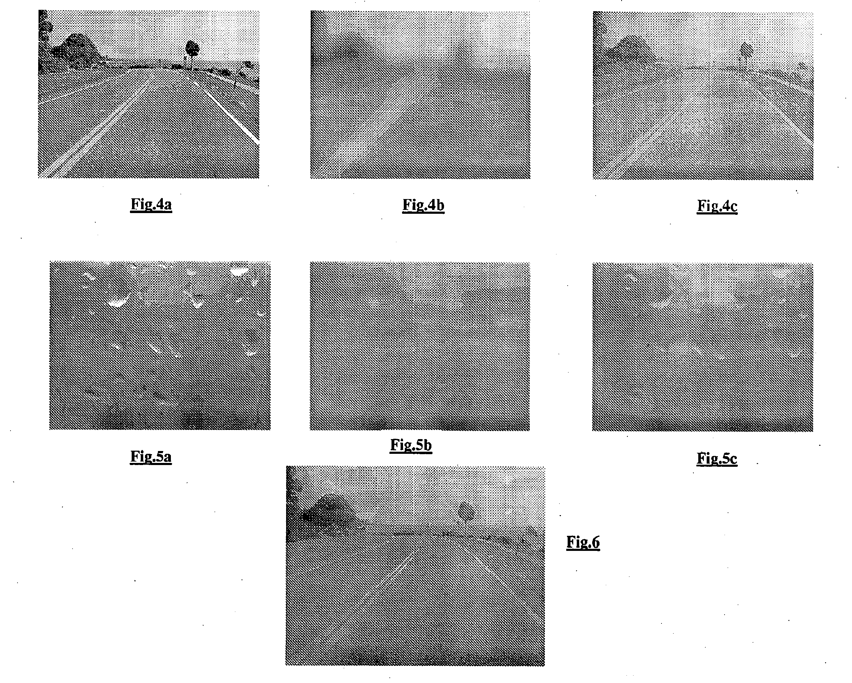

Le résultat, représenté en figure 4c, est une image superposant :
- une image très nette de la scène de route, représentée en figure 4a (et correspondant aux rayons r4 passant à la périphérie comme représenté en figure 2a, c'est-à-dire traversant la zone Z1 à focale à l'infini)
- et une image très floue (correspondant aux rayons r5 passant au centre comme représenté en figure 2a, c'est-à-dire les rayons passant par la zone Z2 à focale réduite de la lentille L1).

Venons-en maintenant à la goutte d'eau G : elle est bien imagée par les rayons traversant la zone Z2 de la lentille L1, ce sont les rayons r6 représentés en figure 2b. Son image est par contre très floue pour les rayons r7 passant par Z1 : ce sont les rayons r7 représentés en figure 2b.

Le résultat, représenté en figure 5c, est une image superposant
- une image très nette de la goutte : figure 5a,
- et une image très floue : figure 5b.

Le système capteur - objectif selon l'invention « regarde » ainsi à la fois au loin et à très courte distance, l'image globale étant représenté à la figure 6 et étant la somme des images 4c et 5c. On vérifie de la figure 6 que l'image obtenue permet une grande netteté à la fois de l'image de la route au loin et des gouttes d'eau sur le pare-brise.

Un traitement d'image du type traitement de renforcement des contrastes est envisageable mais optionnel.

L'invention permet donc bien de partager la même caméra, le même capteur pour de multiples fonctions, grâce à un objectif modifié. On n'est ainsi plus obligé d'avoir un capteur dédié à la détection de pluie.

L'invention trouve ainsi application dans le domaine automobile, mais est également applicable dans tout autre domaine où l'on a besoin d'un capteur qui soit efficace de près comme de loin, notamment dans tout autre type de moyen de locomotion.

Les images obtenues selon l'invention peuvent ensuite faire l'objet de traitements divers en vue de leur exploitation.

## Revendications

1. Système comportant un objectif (O,L1) et un seul capteur (C) photosensible vis-à-vis d'au moins une partie du rayonnement dans le visible et/ou dans le proche infrarouge embarqué sur véhicule, **caractérisé en ce que** ledit capteur est associé à l'objectif (O,L1) présentant une première zone (Z1) qui est focalisée à l'infini et une seconde zone (Z2) focalisée en champ proche pour la détection de gouttes de pluie sur un pare-brise du véhicule.

2. Système selon la revendication précédente, **caractérisé en ce que** l'objectif (O,L1) comporte une pluralité d'éléments optiques du type lentilles, notamment regroupées en un ou plusieurs trains de lentilles, dont un élément optique (L1) définissant la seconde zone (Z2) et disposé dans ou substantiellement à proximité d'un plan de pupille d'ouverture de l'objectif (O,L1).

3. Système selon la revendication précédente, **caractérisé en ce que** l'élément optique (L1) définissant la seconde zone (Z2) est le premier élément optique depuis l'entrée de l'objectif (O,L1), ou est un élément optique disposé juste en amont de celle-ci.

4. Système selon la revendication précédente, **caractérisé en ce que** l'élément optique (L1) définissant la seconde zone (22) est une lentille majoritairement neutre sur le plan optique et présentant localement (Z2) la focalisation voulue.

5. Systeme selon la revendication précédente, **caractérisé en ce que** l'élément optique (L1) majoritairement neutre sur le plan optique est de type lentille à faces d'entrée et de sortie parallèles, et présentant localement une face de sortie sensiblement au moins partiellement convexe (Z2), notamment de type sphérique ou asphérique.

6. Système selon la revendication 3, **caractérisé en ce que** l'élément optique (L1) définissant la seconde zone (Z2) est la première lentille de X l'objectif (O,L1), la seconde zone (Z2) étant obtenu par une modification locale de la courbure de la face de sortie de la gentille, notamment avec une partie convexe différente de la courbure du reste de la face de sortie.

7. Système selon la revendication précédente, **caractérisé en ce que** la seconde zone (Z2) de focale (F2) de la face de sortie de l'élément optique (L1) est située dans la partie centrale dudit élément.

8. Système selon l'une des revendications précédentes, **caractérisé en ce qu'**il est utilisé dans un procédé de détection de gouttes de pluie sur un pare-brise du véhicule.

9. Système selon la revendication précédente, **caractérisé en ce qu'**il est aussi utilisé pour la saisie d'images dé scènes de la route à travers le pare-brise du véhicule.

10. Procédé de détection de gouttes de pluie sur un pare-brise d'un véhicule à l'aide d'un système comportant un objectif (O,L1) et un seul capteur (C) photosensible vis-à-vis d'au moins une partie du rayonnement dans le visible et/ou dans le proche infra-rouge, **caractérisé en ce que** ledit capteur est associé à l'objectif (O,L1) présentant une première zone (Z1) qui est focalisée à l'infini et une seconde zone (Z2) focalisée en champ proche.

11. Dispositif de traitement d'images embarqué sur un véhicule automobile, **caractérisé en ce qu'**il utilise au moins un système selon l'une des revendications 1 à 9.

12. Procédé de traitement d'images, **caractérisé en ce qu'**il utilise les signaux reçus par le capteur (C) du systéme selon l'une des revendications 1 à 9, embarqué sur un véhicule automobile.

13. Véhicule automobile **caractérisé en ce qu'**il est muni du système selon l'une au moins des revendications 1 à 9, le système étant disposé derrière la zone essuyée du pare-brise du véhicule automobile.

## Claims

1. System comprising an objective (O, L1) and a single sensor (C) photosensitive vis-a-vis at least part of the radiation in the visible and/or near infrared range installed on a vehicle, **characterised in that** the said sensor is associated with the objective (O, L1) having a first zone (Z1) that is focused to infinity and a second zone (Z2) focused in near field for detecting rain drops on a windscreen of the vehicle.

2. System according to the preceding claim, **characterised in that** the objective (O, L1) comprises a plurality of optical elements of the lens type, in particular grouped together in one or more trains of lenses, including an optical element (L1) defining the second zone (Z2) and disposed in or substantially close to an opening pupil plane of the objective (O, L1).

3. System according to the preceding claim, **characterised in that** the optical element (L1) defining the second zone (Z2) is the first optical element from the entry of the objective (O, L1), or is an optical element disposed just upstream thereof.

4. System according to the preceding claim, **characterised in that** the optical element (L1) defining the second zone (Z2) is a lens mainly neutral on an optical level and having locally (Z2) the required focusing.

5. System according to the preceding claim, **characterised in that** the optical element (L1) mainly neutral on the optical level is of the lens type with parallel entry and exit faces, and having locally an exit face substantially at least partially convex (Z2), in particular of the spherical or aspheric type.

6. System according to claim 3, **characterised in that** the optical element (L1) defining the second zone (Z2) is the first lens of the objective (O, L1), the second zone (Z2) being obtained by a local modification of the curvature of the exit face of the lens, in particular with a convex part different from the curvature of the rest of the exit face.

7. System according to the preceding claim, **characterised in that** the second zone (Z2) of focal distance (F2) of the exit face of the optical element (L1) is situated in the central part of the said element.

8. System according to one of the preceding claims, **characterised in that** it is used in a method of detecting drops of rain on a windscreen of the vehicle.

9. System according to the preceding claim, **characterised in that** it is also used for the capture of images of scenes of the road through the windscreen of the vehicle.

10. Method of detecting drops of rain on a windscreen of a vehicle by means of a system comprising an objective (O, L1) and a single sensor (C) photosensitive vis-a-vis at least part of the radiation in the visible and/or near infrared range, **characterised in that** the said sensor is associated with the objective (O, L1) having a first zone (Z1) that is focused to infinity and a second zone (Z2) focused in near field.

11. Image processing device installed on a motor vehicle, **characterised in that** it uses at least one system according to one of claims 1 to 9.

12. Image processing method, **characterised in that** it uses the signals received by the sensor (C) of the system according to one of claims 1 to 9 installed on a motor vehicle.

13. Motor vehicle, **characterised in that** it is provided with the system according to at least one of claims 1 to 9, the system being disposed behind the wiped area of the windscreen of the motor vehicle.

## Patentansprüche

1. System mit einem Objektiv (O, L1) und einem einzigen, an Bord eines Fahrzeug befindlichen, gegenüber wenigstens einem Teil der sichtbaren Strahlung und/oder der nahen Infrarotstrahlung lichtempfindlichen Sensor (C),
**dadurch gekennzeichnet, dass** der Sensor dem Objektiv (O, L1) zugeordnet ist, das einen ersten Bereich (Z1), der ins Unendliche fokussiert ist, und einen zweiten im Nahfeld fokussierten Bereich (Z2) zur Detektion von Regentropfen auf einer Windschutzscheibe des Fahrzeugs aufweist.

2. System nach dem vorhergehenden Anspruch,
**dadurch gekennzeichnet, dass** das Objektiv (C, L1) eine Vielzahl optischer Elemente vom Typ Linsen umfasst, die insbesondere in einem oder mehreren Linsensätzen zusammengefasst sind, wovon ein optisches Element (L1) den zweiten Bereich (Z2) definiert und in oder im Wesentlichen in der Nähe einer Ebene der Öffnungspupille des Objektivs (O, L1) angeordnet ist.

3. System nach dem vorhergehenden Anspruch,
**dadurch gekennzeichnet, dass** das den zweiten Bereich (Z2) definierende optische Element (L1) das erste optische Element nach dem Einlass des Objektivs (O, L1) ist oder ein unmittelbar vor diesem Bereich angeordnetes optisches Element ist.

4. System nach dem vorhergehenden Anspruch,
**dadurch gekennzeichnet, dass** das den zweiten Bereich (L2) definierende optische Element (L1) eine optisch überwiegend neutrale Linse ist, die stellenweise (Z2) die gewünschte Fokussierung aufweist.

5. System nach dem vorhergehenden Anspruch,
**dadurch gekennzeichnet, dass** das optisch überwiegend neutrale optische Element (L1) vom Typ Linse mit paralleler Eintritts- und Austrittsfläche ist, die stellenweise eine Austrittsfläche aufweist, die im Wesentlichen wenigstens teilweise konvex (Z2) ist, insbesondere von sphärischer oder asphärischer Art.

6. System nach Anspruch 3,
**dadurch gekennzeichnet, dass** das den zweiten Bereich (Z2) definierende optische Element (L1) die erste Linse des Objektivs (O, L1) ist, wobei der zweite Bereich (Z2) durch eine lokale Veränderung der Krümmung der Austrittsfläche der Linse erzielt ist, insbesondere mit einem konvexen Teil, der sich von der Krümmung der übrigen Austrittsfläche unterscheidet.

7. System nach dem vorhergehenden Anspruch,
**dadurch gekennzeichnet, dass** der zweite Bereich (Z2) der Fokussierung (F2) der Austrittsfläche des optischen Elements (L1) im mittleren Teil des Elements liegt.

8. System nach einem der vorhergehenden Ansprüche,
**dadurch gekennzeichnet, dass** es in einem Verfahren zur Detektion von Regentropfen auf einer Windschutzscheibe des Fahrzeugs Verwendung findet.

9. System nach dem vorhergehenden Anspruch,
**dadurch gekennzeichnet, dass** es auch zur Bilderfassung von Straßenszenen durch die Windschutzscheibe des Fahrzeugs Verwendung findet.

10. Verfahren zur Detektion von Regentropfen auf einer Windschutzscheibe eines Fahrzeugs mit Hilfe eines Systems mit einem Objektiv (O, L1) und einem einzigen gegenüber wenigstens einem Teil der sichtbaren Strahlung und/oder der nahen Infrarotstrahlung lichtempfindlichen Sensor (C),
**dadurch gekennzeichnet, dass** der Sensor dem Objektiv (O, L1) zugeordnet ist, das einen ersten Bereich (Z1), der ins Unendliche fokussiert ist, und einen zweiten im Nahfeld fokussierten Bereich (Z2) aufweist.

11. An Bord eines Fahrzeugs befindliche Vorrichtung zur Bildverarbeitung,
**dadurch gekennzeichnet, dass** sie wenigstens ein System nach einem der Ansprüche 1 bis 9 verwendet.

12. Bildverarbeitungsverfahren,
**dadurch gekennzeichnet, dass** es die Signale verwendet, die von dem Sensor (C) des Systems nach einem der Ansprüche 1 bis 9 empfangen werden, das sich an Bord eines Kraftfahrzeugs befindet.

13. Kraftfahrzeug,
**dadurch gekennzeichnet, dass** es mit dem System nach wenigstens einem der Ansprüche 1 bis 9 ausgerüstet ist, wobei das System hinter dem Wischbereich der Windschutzscheibe des Kraftfahrzeugs angeordnet ist.
